# EUROPEAN PATENT APPLICATION

(11) **EP 3 557 931 A1**
(43) Date of publication of application: **23.10.2019**
(21) Application number: 17886967.3
(22) Date of filing: 26.12.2017
(51) Int. Cl.: H04W 72/12, H04W 28/04, H04W 56/00, H04W 72/04

(54) **USER TERMINAL AND WIRELESS COMMUNICATIONS METHOD**

(30) Priority: 28.12.2016 JP 2016255537
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2017/046563
(87) International publication number: WO 2018/124032

(57) **Abstract**

The present invention is designed so that UL signals are suitably transmitted in response to the receipt of predetermined DL signals even when the processing time in radio base stations and/or user terminals is shortened. According to one aspect of the present invention, a user terminal has a receiving section that receives a DL signal, and a control section that controls the transmission of a UL signal in response to the DL signal based on timing advance, and the control section exerts control so that, regardless of the timing advance value, the UL signal is transmitted in the UL resource that is located a predetermined period after the timing where the DL signal is received.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). Also, for further broadbandization and increased speed beyond LTE, successor systems of LTE (for example, LTE-A (LTE-Advanced), FRA (Future Radio Access), 4G, 5G, 5G+ (plus), NR (New RAT), LTE Rel. 14, LTE Rel. 15 and/or later versions) are under study.

In existing LTE systems (for example, LTE Rel. 8 to 13), downlink (DL) communication and/or uplink (UL) communication are performed using 1 ms transmission time intervals (TTIs) (also referred to as "subframes" and so on). This 1 ms TTI is the time unit for transmitting one channel-encoded data packet, and serves as the unit of processing in, for example, scheduling, link adaptation, retransmission control (HARQ (Hybrid Automatic Repeat reQuest)) and so on.

Also, in existing LTE systems (for example, LTE Rel. 8 to 13), frequency division duplex (FDD) and time division duplex (TDD) are supported as duplex schemes. FDD is a scheme to assign different frequencies between DL and UL, and is also referred to as "frame structure (FS) type 1 (FS 1)." TDD is a scheme to switch between DL and UL over time in the same frequency, and is also referred to as "frame structure type 2 (FS 2)." In TDD, communication carried out based on UL/DL configurations, which define the formats of UL subframes and DL subframes in radio frames.

Also, in existing LTE systems (for example, LTE Rel. 8 to 13), the timing to transmit retransmission control information (for example, an ACK (ACKnowledgement) or a NACK (Negative ACK), also referred to as "A/N," "HARQ-ACK," and so on) in response to a DL shared channel (for example, PDSCH (Physical Downlink Shared CHannel), hereinafter also referred to as "PDSCH") is controlled on the assumption that the reference value for transmission timing is fixed at 4 ms, taking into account the signal processing time (processing time) in user terminals and/or radio base stations.

For example, in FDD in existing LTE systems (for example, LTE Rel. 8 to 13), when a PDSCH is received in subframe #n, an A/N is transmitted (fed back) in response to this PDSCH in subframe #n+4, on the assumption that the processing time of the PDSCH and/or the like in a user terminal amount to 4 ms. Also, in TDD, when a PDSCH is received in DL subframe #n, an A/N is transmitted in response to this PDSCH in subframe #n+4 or a later subframe, on the assumption that the processing time of the PDSCH and/or the like in a user terminal amount to 4 ms.

Similarly, in existing LTE systems (for example, LTE Rel. 8 to 13), the timing to transmit an A/N (also referred to as "UL HARQ timing" and/or the like) in response to a UL shared channel (for example, PUSCH (Physical Uplink Shared CHannel), hereinafter also referred to as "PUSCH") is also controlled by fixing the reference value for signal transmission timing in user terminals and/or radio base stations at 4 ms.

Also, in existing LTE systems, when downlink control information that schedules a PUSCH (UL grant) is received in subframe #n, the PUSCH is transmitted in subframe #n+4 on the assumption that the processing time of the PUSCH and/or the like in a user terminal amount to 4 ms.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In order to reduce the latency in future radio communication systems (for example, NR), research is under way to shorten the signal processing time in base stations and/or UEs. However, using conventional transmission timing determining methods for determining scheduling timings and/or HARQ timings, such as those described above, based on subframe indices, on a fixed basis, in future radio communication systems, might cause a decrease in spectral efficiency, a decrease in communication throughput, and so on, especially when the processing time is shortened.

The present invention has been made in view of the above, and it is therefore an object of the present invention to provide a user terminal and a radio communication method, whereby, even when the processing time in radio base stations and/or user terminals is shortened, UL signals can be suitably transmitted in response to receipt of predetermined DL signals.

### Solution to Problem

According to one aspect of the present invention, a user terminal has a receiving section that receives a DL signal, and a control section that controls the transmission of a UL signal in response to the DL signal based on timing advance, and the control section exerts control so that, regardless of the timing advance value, the UL signal is transmitted in the UL resource that is located a predetermined period after the timing where the DL signal is received.

### Advantageous Effects of Invention

According to the present invention, even when the processing time in radio base stations and/or user terminals is shortened, UL signals can be suitably transmitted in response to receipt of predetermined DL signals.

### Brief Description of Drawings

FIG. 1 is a diagram to show an example of the timing for transmitting an A/N in FDD;
FIGs. 2A and 2B are diagrams to show examples of scheduling/HARQ timings in existing LTE;
FIGs. 3A and 3B are diagrams to show examples of scheduling/HARQ timings when the processing time is reduced;
FIG. 4 is a diagram to show an example of a first aspect;
FIG. 5 is a diagram to show an example of a second aspect;
FIG. 6 is a diagram to show an alternative example of the second aspect;
FIG. 7 is a diagram to show an example, in which a part of scheduling/HARQ timing information matches a scheduling/HARQ timing that is based on an existing transmission timing determining method;
FIG. 8 is a diagram to show an example of a schematic structure of a radio communication system according to one embodiment of the present invention;
FIG. 9 is a diagram to show an example of an overall structure of a radio base station according to one embodiment of the present invention;
FIG. 10 is a diagram to show an example of a functional structure of a radio base station according to one embodiment of the present invention;
FIG. 11 is a diagram to show an example of an overall structure of a user terminal according to one embodiment of the present invention;
FIG. 12 is a diagram to show an example of a functional structure of a user terminal according to one embodiment of the present invention; and
FIG. 13 is a diagram to show an example of a hardware structure of a radio base station and a user terminal according to one embodiment of the present invention.

### Description of Embodiments

In existing LTE systems (for example, LTE Rel. 8 to 13), a user terminal (UE: User Equipment) receives and/or transmits data based on downlink control information (DCI) (also referred to as "scheduling DCI) that is transmitted from a base station (eNB: eNode B). For example, DCI that schedules DL data may be referred to as "DL assignment (DL grant)," and DCI to schedule UL data may be referred to as "UL grant."

The UE exerts control so as to transmit a predetermined UL signal in response to a predetermined DL signal transmitted from the base station. For example, in existing LTE systems, hybrid automatic repeat request (HARQ) is supported, in order to reduce the deterioration of the quality of communication between the UE and the base station.

Based on the receiving result of a PDSCH (such as the decoding result) transmitted from the base station, the UE transmits an A/N in response to the PDSCH using a PUSCH or a PUCCH. The base station controls the transmission of the PDSCH (including initial transmission and/or retransmission) based on the A/N from the UE.

In the DL and/or the UL (hereinafter referred to as "DL/UL") of existing LTE systems, the timing of transmission (also referred to as "DL/UL HARQ timing," or referred to simply as "HARQ timing") is controlled based on a predefined transmission timing reference value, so that an A/N is transmitted a predetermined time after a subframe in which data (PDSCH or PUSCH) is transmitted or received. For example, in FDD, when a PDSCH is received in a subframe, an A/N in response to this PDSCH is transmitted in the subframe 4 ms after the subframe in which the PDSCH was received.

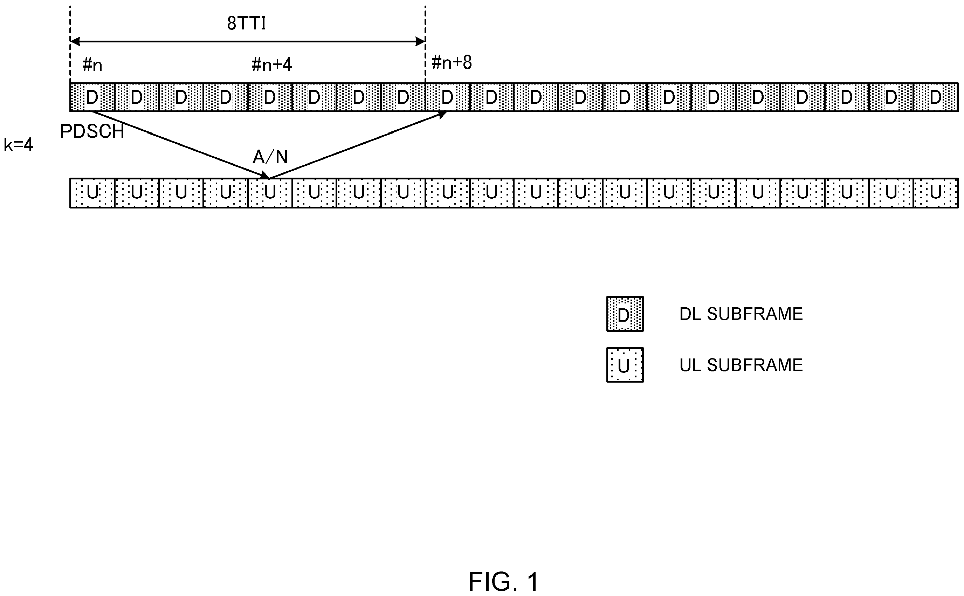

FIG. 1 is a diagram to show an example of the timing for transmitting an A/N in FDD. As shown in FIG. 1, in FDD, when a UE receives a PDSCH in subframe #n, the UE transmits an A/N in response to the PDSCH, to the base station, 4 ms later, in subframe #n+4. If the A/N received in subframe #n+4, normally, the base station retransmits the HARQ process or makes an initial transmission, in or after subframe #n+8, which is the subframe 4 ms after subframe #n+4 (or the same can be performed before subframe #n+8).

Also, the UE controls the transmission timing (also referred to as "scheduling timing") so that, a predetermined period of time after a subframe in which DCI (UL grant) transmitted from the base station is received, transmission using the PUSCH takes place in the resource specified (scheduled) by the DCI. Based on the receiving result of the PUSCH, the base station transmits an A/N in response to the PUSCH using, for example, a retransmission control channel (for example, a PHICH (Physical Hybrid-ARQ Indicator CHannel)). The UE controls the transmission of the PUSCH (including initial transmission and/or retransmission) based on the A/N from the base station.

To summarize the above, according to FS 1 (FDD) for existing LTE systems, when a UE detects a DL assignment for DL data in subframe #n, the UE transmits an HARQ-ACK in response to the DL data in subframe #n+4. Also, if the UE detects a UL grant for UL data in subframe #n, the UE transmits this UL data in subframe #n+4.

Meanwhile, according to FS 2 (TDD) for existing LTE systems, when the UE detects a DL assignment for DL data in subframe #n, the UE transmits an HARQ-ACK in response to the DL data in subframe #n+k. Also, when the UE detects a UL grant for UL data in subframe #n, the UE transmits this UL data in subframe #n+k.

Here, the value of k is 4 or more, and determined based on the TDD UL/DL configuration and subframe index #n in which the DCI is received. In FS 2, on the assumption that the processing time of the PDSCH/PUSCH in the UE is equivalent to that in FS 1, an A/N in response to a PDSCH is transmitted in a UL subframe 4 ms or more after the subframe in which the PDSCH was received.

As described above, in existing LTE systems (Rel.13 or earlier versions), scheduling timings, HARQ transmission timings and so on are controlled with fixed values, based on 4 ms (used as a reference value).

By the way, in future radio communication systems (for example, NR), UEs may have different processing capabilities. Some UEs may support signal processing with shorter processing latencies.

For example, one UE may support self-contained operations. Here, a self-contained operation may refer to, for example, an operation that receives a predetermined DL signal (for example, a data signal) in a predetermined period (for example, a subframe, a slot, and/or the like) and finishes transmitting (feeding back) a UL signal (for example, an HARQ-ACK) based on the DL signal. That is, a UE that supports a self-contained operation is likely to have high processing capabilities.

Therefore, if a UE supporting a self-contained operation detects a DL assignment for DL data in subframe #n, the UE may transmit an HARQ-ACK in response to the DL data in same subframe #n. Also, when detecting a UL grant for UL data in subframe #n, the UE may transmit the UL data in subframe #n.

Meanwhile, another UE may need a slightly longer processing time. For example, if this another UE detects a DL assignment for DL data in subframe #n, the UE can transmit an HARQ-ACK in response to the DL data in same subframe #n+k. Also, when detecting a UL grant for UL data in subframe #n, the UE can transmit this UL data in subframe #n+k. Here, the value of k may vary among a plurality of UEs, and, for example, k=4, k=3 and other values may be used.

Therefore, conventional transmission timing determining methods for determining scheduling timings and/or HARQ timings (hereinafter also simply referred to as "scheduling/HARQ timings") based on subframe indices as described above may not work well in future radio communication systems.

In addition, conventional methods of determining fixed transmission timings might lead to a problem where it is difficult to support large timing advance (TA) values, especially when the processing time in UEs is short. TA is a process that is used to adjust the timing for receiving UL signals on the base station side. UL transmission from UEs can be shifted so as to precede DL subframe timings, based on TA information indicated by the base station.

Note that, in existing LTE systems, TA information (TA values) is provided in, for example, the MAC PDU (Medium Access Control Protocol Data Unit) for random access response, a predetermined MAC control element (CE) reported in the PDSCH (Physical Downlink Shared Channel).

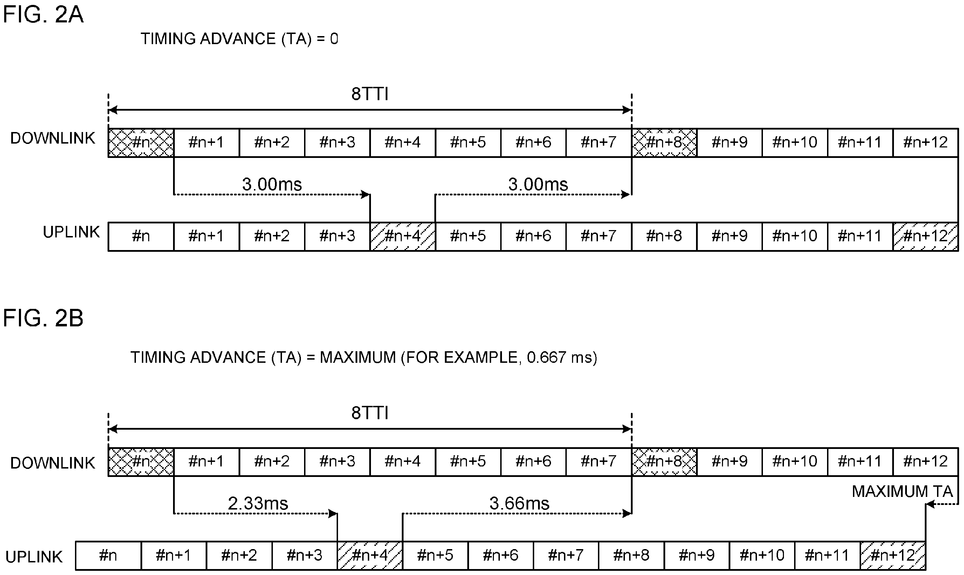

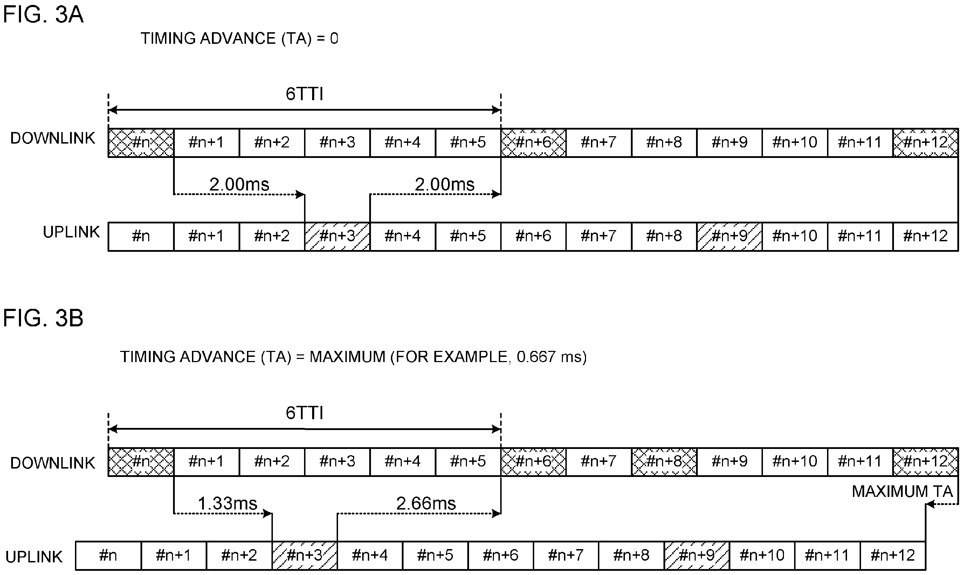

Now, the above problem will be explained below with reference to FIGs. 2 and FIGs. 3. FIGs. 2A and 2B are diagrams to show examples of scheduling/HARQ timings in existing LTE.

FIG. 2A shows an example with TA=0. A UE needs to perform the receiving process (Rx proc.) for DL signals and the transmission process (Tx proc.) for UL signals (for example HARQ-ACK) within 3 ms from subframe #n, in which a DL signal (for example, a UL grant) is received, to the beginning of subframe #n+4, which is the transmitting subframe. Also, the base station needs to perform the UL signal receiving process and the DL signal transmission process within 3 ms from subframe #n+4, in which a UL signal is received, to the beginning of subframe #n+8, in which data is transmitted/retransmitted.

FIG. 2B shows an example where TA is the maximum value (about 0.667 ms (which is equivalent to the propagation delay when the cell radius is about 100 km)). The UE needs to perform the DL signal receiving process and the UL signal transmission process within approximately 2.33 ms (3 ms-0.667 ms) from subframe #n, in which a DL signal is received, to the beginning of subframe #n+4, which is the transmitting subframe. Also, the base station needs to perform the UL signal receiving process and the DL signal transmission process within approximately 3.66 ms (3 ms+0.667 ms) from subframe #n+4, in which a UL signal is received, to the beginning of subframe #n+8, in which data is transmitted/retransmitted.

Thus, when TA grows bigger, the UE has less room for processing latency. Some UEs may be unable to make processes in time, and may be unable to transmit UL signals at desired timings. In this case, a decrease in spectral efficiency, a decrease in communication throughput and suchlike problems might occur.

Meanwhile, it may be possible to reserve processing time in the UE by limiting the TA value. However, limiting the TA value might lead to limited cell coverage, and a decrease in spectral efficiency, a decrease in communication throughput and suchlike problems might occur.

Furthermore, NR is under study to shorten the signal processing time in base stations and/or UEs in order to reduce the latency. In this case, for example, scheduling/HARQ timings may be controlled based on a reference value (for example, 3 ms) that is smaller than 4 ms.

FIGs. 3A and 3B are diagrams to show examples of scheduling/HARQ timings where the processing time is shortened. FIG. 3A shows an example with TA=0. As in the example shown in FIG. 2, a UE needs to perform the DL signal receiving process and the UL signal transmission process within 2 ms from subframe #n, in which a DL signal is received, to the beginning of subframe #n+3, which is the transmitting subframe. Also, the base station needs to perform the UL signal receiving process and the DL signal transmission process within 2 ms from subframe #n+3, in which an HARQ-ACK is received, to the beginning of subframe #n+6, in which data is transmitted/retransmitted

FIG. 3B shows an example where TA is the maximum value (approximately 0.667 ms (which is equivalent to the propagation delay when the cell radius is about 100 km)). The UE needs to perform the DL signal receiving process and the UL signal transmission process within approximately 1.33 ms (2 ms-0.667 ms) from subframe #n, in which a DL signal is received, to the beginning of subframe #n+3, which is the transmitting subframe. Also, the base station needs to perform the UL signal receiving process and the DL signal transmission process within approximately 2.66 ms (2 ms+0.667 ms) from subframe #n+3, in which an HARQ-ACK is received, to the beginning of subframe #n+6, in which data is transmitted/retransmitted.

Also in both LTE and NR, study is under way to make the TTIs a shorter time unit (for example, a slot, a minislot, a subslot, a shortened TTI (sTTI), etc.), not a subframe. A short time unit like this may be referred to as a "TTI (short TTI) that is shorter than a 1-ms subframe (TTI)." When the TTIs become shorter, the processing time that is available for the UE also becomes shorter, and therefore the above-mentioned problems might become even more serious.

Note that a TTI may represent the time unit for use when transmitting/receiving transport blocks for transmitting/receiving data, code blocks and/or codewords. When a TTI is provided, the period of time (for example, the number of symbols) in which transport blocks, code blocks and/or codewords are actually mapped may be shorter than the TTI.

For example, when a TTI is formed with a predetermined number of symbols (for example, fourteen symbols), transport blocks, code blocks and/or codewords of transmitting/receiving data can be transmitted and received in one or a predetermined number of symbol periods. If the number of symbols in which transport blocks, code blocks and/or codewords of transmitting/receiving data is smaller than the number of symbols constituting a TTI, reference signals, control signals and so on can be mapped to symbols in the TTI where no data is mapped.

Therefore, the present inventors have investigated a method for appropriately controlling the transmission of UL signals in response to predetermined DL signals, on the assumption that the processing time in base stations and/or UEs is shorter than in existing LTE systems, and arrived at the present invention. According to one aspect of the present invention, even when the processing time in UEs is short, it is still possible to perform UL transmission at appropriate timings without limiting the TA value.

Now, embodiments of the present invention will be described below in detail. Each embodiment can be applied to FDD and/or TDD.

In the following description, a predetermined time unit (for example, a subframe, a slot, a minislot, an sTTI and/or the like) will be referred to as a "TTI." A TTI may be specified by a predetermined index (for example, a subframe index, a slot index, a minislot index, an sTTI index, etc.). Note that a TTI may be referred to as a "long TTI," or may be referred to as a "short TTI."

### (First Aspect)

According to the first aspect of the present invention, regardless of the value of TA, a UE judges that the first timing a UL resource is available a predetermined period after a predetermined downlink signal is received (or based on the timing a predetermined downlink signal is received) is the scheduling/HARQ timing. Here, the predetermined period may be referred to as "minimum processing time," "minimum required processing time," "downlink processing time," "terminal processing time," and so on.

In other words, the UE determines the scheduling/HARQ timing based on the time gap from the receipt of a predetermined downlink signal to uplink transmission, rather than selecting, in a fixed manner, the TTI a predetermined number of indices after the TTI index where the predetermined downlink signal was received (that is, the TTI index of the pertaining UL subframe).

For example, the UE may decide that the UL transmission timing is the time that comes a predetermined period later, based on the timing at which DCI (UL grant) is received, regardless of the value of TA. Also, the UE may decide that the HARQ transmission timing is the time that comes a predetermined period later, based on the timing at which a downlink data signal (for example, a PDSCH) is received, regardless of the value of TA. If the time that comes a predetermined period later is in the middle of a TTI, the UE may decide that the next TTI (or a subsequent TTI) following the predetermined period is the UL transmission timing.

Note that the phrase "based on a receiving (transmitting) timing" as used herein may be read as "with respect to the end of a receiving (transmitting) TTI," "with respect to the top of a receiving (transmitting) TTI," "with respect to an arbitrary timing in a receiving (transmitting) TTI," or convey other suchlike meanings.

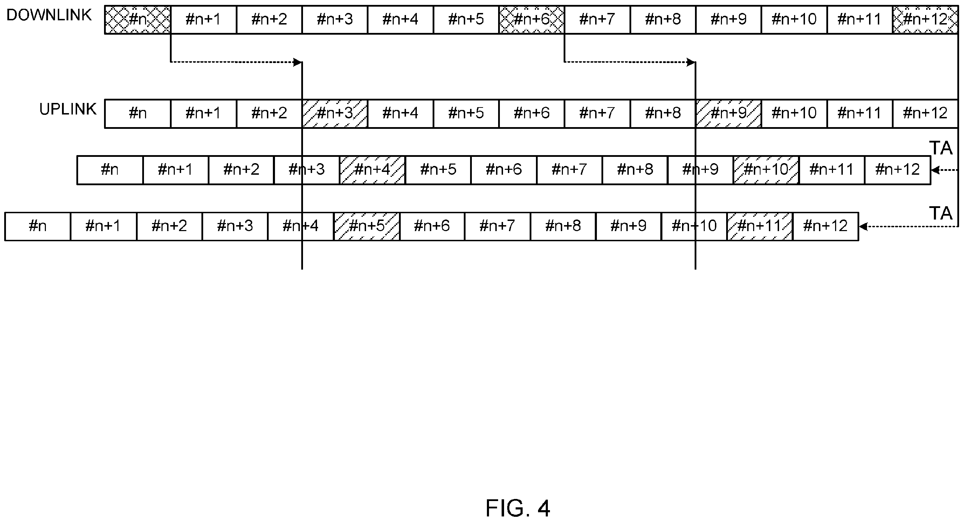

FIG. 4 is a diagram to show an example of the first aspect. In this example, the UE requires two or more TTIs for processing. FIG. 4 shows the indices of TTIs.

When a UE receives a DL signal in TTI #n (#N+6), the UE maps the scheduled data and/or HARQ feedback to the first available UL resource after a predetermined period (for example, two TTIs) from the timing of the end of TTI #n (#n+6), and transmits the data and/or the HARQ feedback.

For example, this UL resource may be the UL resource corresponding to TTI #n+3 (#n+9) when TA is 0, the UL resource corresponding to TTI #n+4 (#n+10) when TA is 0 or more and less than one TTI, or the UL resource corresponding to TTI #n+5 (#n+1 1) when TA is one TTI or more and less than two TTIs.

Note that the above predetermined period may be defined to include the time period of the TTI in which the DL signal is received. For example, although, in FIG. 4, the predetermined period is defined with respect to the end of TTI #n as the starting point, the timing TTI #n starts may be defined as the starting point.

Note that the above predetermined period may be configured individually for each cell, configured individually for each specific UE group or configured individually for each UE, or the above predetermined period may be defined in the specification.

Information about the above predetermined period may be reported using higher layer signaling (for example, RRC (Radio Resource Control) signaling, MAC signaling, broadcast information (the MIB (Master Information Block), SIBs (System Information Blocks), etc.) or physical layer signaling (for example, DCI), or reported by combining these.

The UE may report information about possible predetermined periods to the network as UE capability information. For example, this information may be information about the processing time of predetermined signals.

Also, the above predetermined period, signaling related to the predetermined period, and/or UE capability information related to the predetermined period need not be set to uniform values in all cases, and different values can be assigned depending on conditions. For example, large values (for example, a value for three TTIs) may be assigned when the number of MIMO (Multi-Input Multi-Output) space-multiplexing (transmission) layers, the transport block size, the modulation and coding scheme (MCS) and the number of frequency resources (for example, resource blocks) that are allocated are large, small values (for example, a value for two TTIs) may be assigned otherwise.

Also, for example, a large value may be assigned when the number of symbols in a control resource set, in which blind decoding is performed for a DL control channel (for example, a PDCCH (Physical Downlink Control Channel)), is equal to or greater than a predetermined value, or a small value may be assigned otherwise. Also, for example, a large value may be used when the number of symbols in a UL transmission period (for example, a PUCCH and/or PUSCH) is equal to or greater than a predetermined value, or a small value may be used otherwise. In this way, control can be exerted so that, in the event the packet size is small, low-latency timings are applied for acceleration, and, when the packet size is large, the capacity is expanded while tolerating latency.

Also, the above predetermined period, signaling related to the predetermined period and/or UE capability information related to the predetermined period may be defined as a value of an integral multiple of the TTI duration that is configured in the terminal, defined as a value of an integer multiple of the OFDM symbol duration which the terminal uses in transmission or receipt, or defined as a value of an integer multiple of the sampling frequency that the terminal uses in transmission or receipt.

Now, differences between the method of determining a transmission timing based on an actual time gap (the transmission timing determining method of the first aspect) and the method of determining a transmission timing based on a TTI (TTI index) (the transmission timing determining method of existing LTE) will be described below. The "time gap" used in the first aspect refers to the actual processing time that a UE needs to prepare for scheduled UL transmission, and TA is not included.

According to the existing transmission timing determining method, when scheduling DCI is detected in subframe #n, a UE performs the scheduled UL transmission in subframe #n+k. Here, k may be a fixed value, may be RRC-configured, or may be indicated by the DCI. In any case, the period of k subframe includes TA. Therefore, depending on the processing capability of the UE, the minimum value of k or the maximum value of TA is limited.

Meanwhile, with the transmission timing determining method according to the first aspect, when the scheduling DCI is detected in TTI #n, the UE performs the scheduled UL transmission in the TTI of the index corresponding to the value given by rounding up (ceiling) "n+k+TA value" (all in TTI units). Here, for example, k may be the minimum processing time, may be a fixed value, may be RRC-configured, or may be indicated by the DCI. In any case, regardless of the TA value, a processing time of k subframes is guaranteed at all times. In other words, the TTIs (TTI indices) where UL transmission takes place change depending on TA values.

According to the first aspect described above, the maximum TA value and the processing time can be handled separately. For example, in a predetermined cell, even if multiple UEs have different capabilities regarding the processing time and/or use different TTI durations, it is possible to allow all UEs in the cell to use large TA values are used without problem.

### (Second Aspect)

According to a second aspect of the present invention, the UE determines scheduling/HARQ timings based on dynamic commands by DCI. Here, DCI that is received in TTI #n does not indicate TTI #n+k as the scheduling/HARQ timing, but, instead, indicates the k-th TTI, which comes a predetermined period later (after a predetermined period) from the TTI where the DCI was detected (received), and in which a UL resource is available for the scheduled UL transmission and/or HARQ-ACK feedback.

For example, the DCI may include information for identifying the k-th TTI where a UL resource is available (the information may be referred to as "field," "transmission timing information," "scheduling/HARQ timing information," and so on).

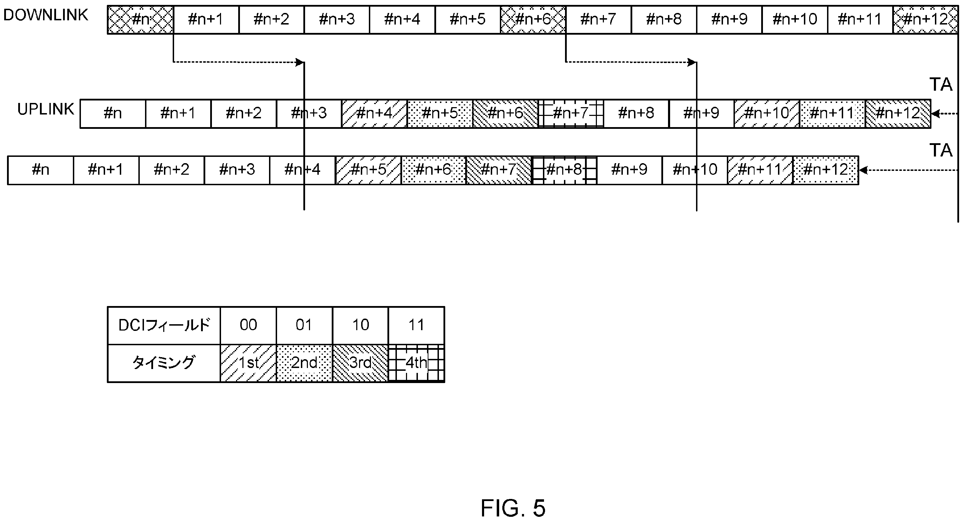

FIG. 5 is a diagram to show an example of the second aspect. In this example, the UE requires two or more TTIs for processing.

When the UE receives a DL signal in TTI #n (#n+6), the UE maps the scheduled data and/or HARQ feedback to the UL resource corresponding to the TTI that is indicated in the DCI and that comes after a predetermined period (for example, two TTIs) from the timing of the end of TTI #n (#n+6), and transmits the scheduled data and/or HARQ feedback. As has been described with the first aspect, information about the above predetermined period may be reported to the UE, and the UE may use this information to select the UL resource.

As shown in FIG. 5, the transmission timing-related information may indicate how many TTIs there are from the TTI that comes a predetermined period (two TTIs in this case) after DCI is detected (for example, the transmission timing information may indicate that the transmission timing is in the first TTI (one TTI later,) the second TTI (two TTIs later,) and so on). In the example of FIG. 5, the first, second, third and fourth timings in the table may indicate one TTI later, two TTIs later, three TTIs later and four TTIs later, respectively.

For example, assuming that the UE receives DCI in TTI #n, if TA is 0 or more but less than one TTI, based on the DCI, the UE may see TTI #n+3, which is located two TTIs after TTI #n, as the point of reference, and transmit UL data and/or HARQ using the UL resources from TTI #n+4 to TTI #n+7, which come one TTI and four TTIs later, respectively.

When the UE receives DCI in TTI #n, for example, if TA is one or more and less than two TTIs, based on the DCI, the UE may see TTI #n+4, which is located two TTIs after TTI #n, as the point of reference, and transmit UL data and/or HARQ using the UL resources from TTI #n+5 to TTI #n+8, which come one TTI and four TTIs later, respectively.

Note that the associations (table) between the fields (indices) contained in the DCI and the timings of UL resources may be configured by higher layer signaling (for example, RRC signaling), or may be provided in the specification. Also, information about the predetermined period may be reported from the base station in the same manner as in the first aspect.

FIG. 5 shows an example in which the field is included in the DCI is two-bits, but this is not limiting. This field may be one bit, or may be three bits or more.

Also, the timing of UL resources specified by the DCI may include the above predetermined period. For example, it is possible to configure a table in which a predetermined period (for example, two TTIs) is added to each timing provided in the table of FIG. 5. In the example of FIG. 5, the first, second, third and fourth timings in the table may indicate three TTIs later, four TTIs later, five TTIs later and six TTIs later, respectively (with respect to the timing the DCI was received). In this case, it is not necessary to separately report the above information related to the predetermined period to the UE, and the UE may select the UL resources based on the DCI and the table.

Furthermore, as for the above field-containing DCI, it is possible to place this field only in DCI that is detected in one or more UE-specific search spaces, and not to place this field in DCI that is detected in other UE-specific search spaces, UE-common search spaces or UE group search spaces. When the UE detects DCI not containing this field, the UE performs UL transmission in accordance with this DCI, but the transmission timing in this case may be a transmission timing that presumes a predetermined processing time (for example, three TTIs).

According to the second aspect described above, it is possible to expect the same advantages as the first aspect. Furthermore, the transmission timing-related information that is reported in DCI on a dynamic basis enables flexible scheduling.

### (Alternative Examples of First Aspect and Second Aspect)

In each of the aspects described above, the UE may decide that the scheduling/HARQ timing is in the same TTI as the TTI where a predetermined downlink signal is received. This is suitable for UEs that are capable of shorter processing time.

In each aspect described above, the time duration of a period where scheduled transmission and/or HARQ feedback is performed does not need to be the same as the time duration of a period in which a predetermined downlink signal is received, and may be, for example, a shorter time duration or a longer time duration. This makes possible the flexible use of resources.

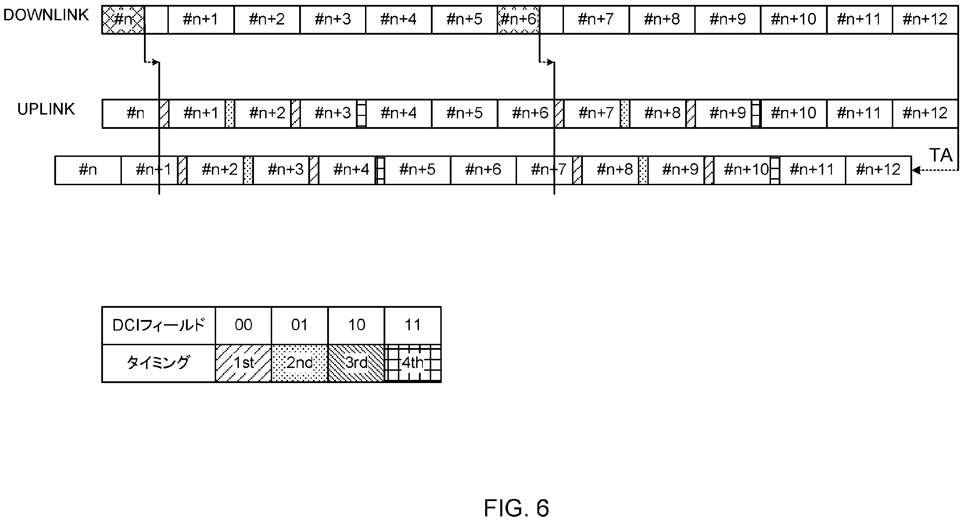

FIG. 6 is a diagram to show an example of an alternative example of the second aspect. In this example, the UE can perform scheduled transmission and/or send HARQ feedback in the same TTI as the TTI where a predetermined downlink signal was received. FIG. 6 shows TTI indices.

When a UE receives a DL signal in a part of the resources of index #n (#n+6), the UE maps scheduled data and/or HARQ feedback to a UL resource that corresponds to the TTI indicated in the DCI and that comes a predetermined period ore more after the timing the receipt of the DL signal is complete. In FIG. 6, the DCI field indicates the last UL resource in the same TTI as the TTI in which the DCI is received or the subsequent TTI.

When the UE receives DCI at index #n (#n+6), for example, if TA is 0, the UE may transmit UL data and/or HARQ based on the DCI, by using the last UL resource in any TTI from #n (#n+6), which is the same TTI, to #n+3 (#n+9), which is three TTIs later.

When the UE receives DCI at index #n, for example, if TA is 0 or more but less than one TTI, the UE may transmit UL data and/or HARQ, based on the DCI, and taking TA into account, by using the last UL resource in any TTI from #n+1 (#n+7), which is the same TTI, to #n+4 (#n+10), which is three TTIs later.

Note that the UL resource to use in scheduling and/or HARQ transmission may be mapped to a position apart from the end of a predetermined TTI, and may be mapped at the top of a predetermined TTI, for example.

### (Third Aspect)

Based on the above aspects, scheduling/HARQ timings can be determined so that processing time is reserved in UEs. However, scheduling/HARQ timings are affected by the adjustment of TA. For example, when the TA value is located in the boundary between two TTI-UL resources, an ambiguity is introduced in the scheduling/HARQ timing, and there is a possibility that the base station cannot accurately specify in which TTIs UL signals are received.

Therefore, according to a third aspect, the base station reports to the UE which one of the method of determining a transmission timing based on a TTI (TTI index) (existing transmission timing determining method) and the method of determining a transmission timing based on an actual time gap (the transmission timing determining method according to the first or the second aspect) should be used, in order to prevent the above ambiguity from being introduced. The UE decides which method to use based on information reported from the base station.

This information may be reported using higher layer signaling (for example RRC signaling) (aspect 3.1), may be reported using DCI (aspect 3.2), or may be reported using a combination of higher layer signaling and DCI (aspect 3.3).

### <Aspect 3.1>

When the existing transmission timing determining method is set, the UE adjusts the TA in the same way as in existing LTE. That is, the TA is adjusted by means of message 2 (random access response), TAC (Timing Advance Command) MAC CE, autonomous adjustment by the UE, and so on, in random access procedures.

If the transmission time determining method based on an actual time gap is set, the UE adjusts the TA in an unambiguous way (in accordance with at least one of following (1) to (3)): (1) The UE reports its own TA value or the monitored DL-UL time gap to the network by using uplink L1 control information (UCI: Uplink Control Information), MAC CE, RRC signaling, and so on; (2) The UE does not autonomously adjust the TA; and (3) The TA value is indicated to the UE via physical layer signaling (for example, TA information (TA indicator) included in DCI), MAC CE and so on. Instead of indicating a relative value with respect to the current TA value as in conventional LTE, the TA value may indicate the absolute value of TA. In this case, the mismatch of recognition between the base station and the UE due to failures to detect TA commands can be resolved.

### <Aspect 3.2>

If scheduling DCI does not contain transmission timing information as described with the second aspect, the UE may determine scheduling/HARQ timings based on the existing transmission timing determining method, and, otherwise (when scheduling DCI includes the above information), the UE may determine scheduling/HARQ timings using the method of determining transmission timings based on an actual time gap.

In this case, the network can guarantee the reasonable range of TA values for when scheduling information that contains no scheduling/HARQ timing information is used in scheduling in UEs.

### <Aspect 3.3>

According to the second aspect, one or more parts of the transmission timing information that is included in scheduling DCI may indicate scheduling/HARQ timings that are based on the existing transmission timing determining method.

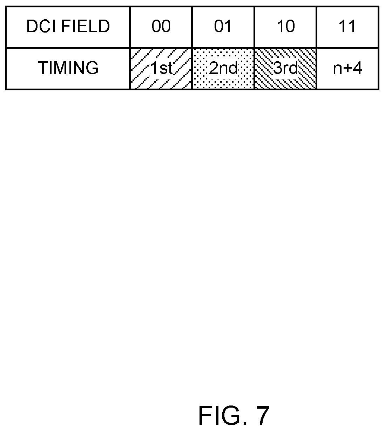

FIG. 7 is a diagram to show an example in which a part of the scheduling/HARQ timing information matches a scheduling/HARQ timing that is based on the existing transmission timing determining method. In FIG. 7, when a predetermined field in DCI shows "00," "01" or "10," the actual time gap-based transmission timing determining method is used.

Meanwhile, if this field shows "11," control is exerted so that data/HARQ feedback is transmitted using the UL resource of the TTI corresponding to #n+4, assuming that #T is the TTI a predetermined downlink signal is received, as when the existing transmission timing determining method is used.

According to the third aspect described above, the UE can switch between the existing transmission timing determining method and the actual time gap-based transmission timing determining method, so that it is possible to prevent scheduling/HARQ timings from being inconsistent between UEs and base stations.

### (Alternative Examples)

Although, with the above aspects, UL transmission timings that are specified by UL grants have been exemplified as the scheduling timings to be controlled, the scheduling timings subject to control are by no means limited to these. For example, the scheduling timings to be controlled may include DL receiving timings specified by DL assignments, the timings of UL transmission reference signals (for example, an uplink measurement reference signal (SRS (Sounding Reference Signal)) that are trigged by DCI, and so on.

### (Radio Communication System)

Now, the structure of a radio communication system according to the present embodiment will be described below. In this radio communication system, each radio communication method according to the above-described embodiments is employed. Note that the radio communication method according to each embodiment may be used alone or may be used in combination.

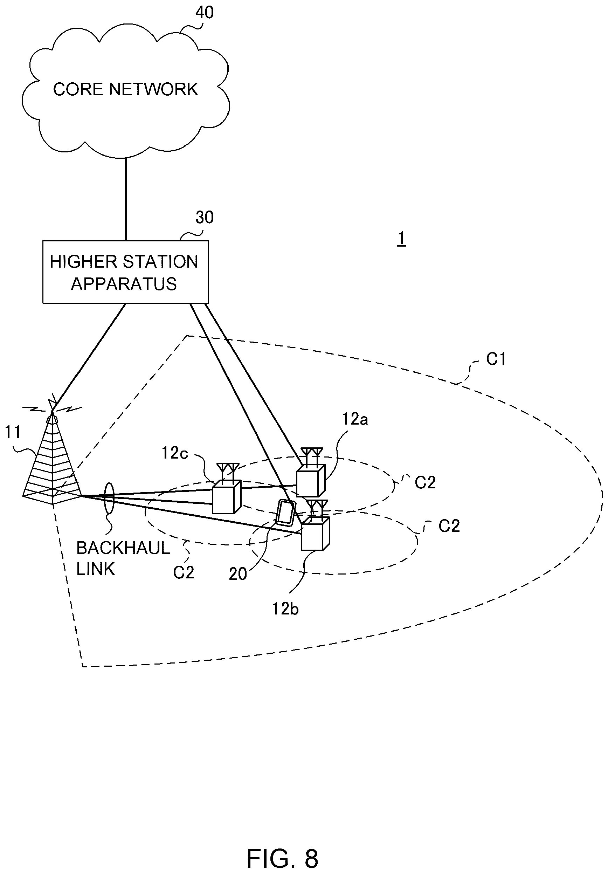

FIG. 8 is a diagram to show an example of a schematic structure of a radio communication system according to one embodiment of the present invention. A radio communication system 1 can employ carrier aggregation (CA), in which a plurality of fundamental frequency blocks (component carriers (CCs)), where the LTE system bandwidth (for example, 20 MHz) constitutes one unit, are grouped into one, and/or employ dual connectivity (DC), which uses a number of cell groups (CGs) that each include one or more CCs. The radio communication system 1 may be also referred to as "SUPER 3G," "LTE-A (LTE-Advanced)," "IMT-Advanced," "4G," "5G," "FRA (Future Radio Access)," "NR (New RAT: New Radio Access Technology)," and so on.

The radio communication system 1 shown in FIG. 8 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. A structure in which different numerologies are applied between cells and/or within cells may be adopted.

The user terminals 20 can connect with both the radio base station 11 and the radio base stations 12. The user terminals 20 may use the macro cell C 1 and the small cells C2, which use different frequencies, at the same time, by means of CA or DC. Also, the user terminals 20 can execute CA or DC by using a plurality of cells (CCs) (for example, two or more CCs). Furthermore, the user terminals can use license band CCs and unlicensed band CCs as a plurality of cells.

Furthermore, the user terminal 20 can perform communication using time division duplexing (TDD) or frequency division duplexing (FDD) in each cell. A TDD cell and an FDD cell may be referred to as a "TDD carrier (frame configuration type 2)," and an "FDD carrier (frame configuration type 1)," respectively.

Furthermore, in each cell (carrier), a single numerology may be employed, or a plurality of different numerologies may be employed. Here, a numerology refers to frequency-direction and time-direction parameters such as subcarrier spacing, symbol duration, cyclic prefix duration, subframe duration and so on.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform inter-terminal (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and OFDMA may be used in UL.

In the radio communication system 1, a DL shared channel (PDSCH (Physical Downlink Shared CHannel), which is also referred to as, for example, a "DL data channel"), which is used by each user terminal 20 on a shared basis, a broadcast channel (PBCH (Physical Broadcast CHannel)), L1/L2 control channels and so on, are used as DL channels. User data, higher layer control information and SIBs (System Information Blocks) are communicated in the PDSCH. Also, the MIB (Master Information Block) is communicated in the PBCH.

The L1/L2 control channels include DL control channels (a PDCCH (Physical Downlink Control CHannel), an EPDCCH (Enhanced Physical Downlink Control CHannel) and so on), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. Retransmission control information (for example, at least one of A/N, NDI, HPN, redundancy version (RV) pertaining to UL signals (for example, the PUSCH) can be communicated using at least one of the PHICH, the PDCCH, and the EPDCCH.

In the radio communication system 1, a UL shared channel (PUSCH: Physical Uplink Shared CHannel, which is also referred to as "UL data channel" and so on), which is used by each user terminal 20 on a shared basis, a UL control channel (PUCCH: Physical Uplink Control CHannel), a random access channel (PRACH: Physical Random Access CHannel) and so on are used as UL channels. User data, higher layer control information and so on are communicated by the PUSCH. Uplink control information (UCI), including at least one of retransmission control information (for example, A/N) pertaining to DL signals (for example, the PDSCH), channel state information (CSI) and a scheduling request (SR) is communicated using the PUSCH or the PUCCH. By means of the PRACH, random access preambles for establishing connections with cells are communicated.

### <Radio Base Station>

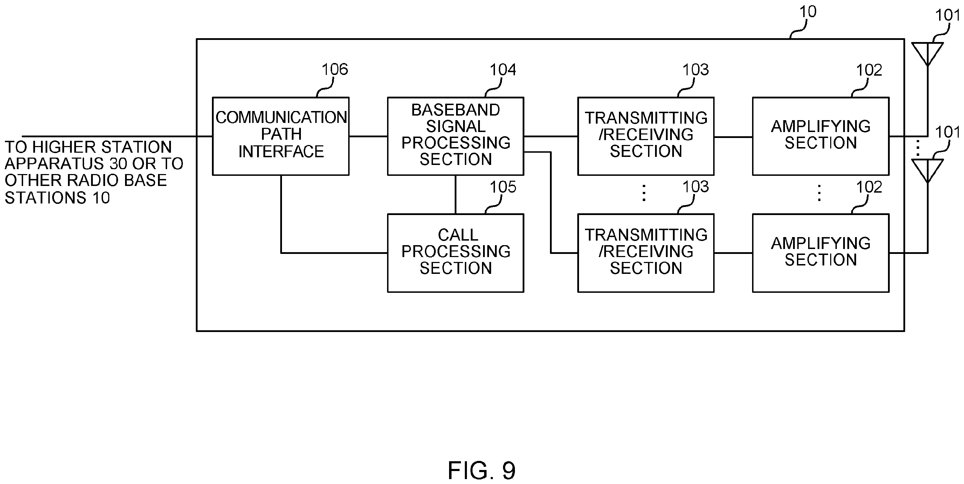

FIG. 9 is a diagram to show an example of an overall structure of a radio base station according to one embodiment of the present invention. A radio base station 10 includes a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving sections 103. Furthermore, DL control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

The transmitting/receiving sections 103 may transmit DCI (DL assignment) that schedule a DL shared channel (for example, PDSCH), DCI (UL grant) that schedules a UL shared channel (for example, PUSCH), DL data (DL shared channel) and so on.

The transmitting/receiving sections 103 may receive retransmission control information (HARQ-ACK) pertaining to this DL shared channel. Also, the transmitting/receiving sections 103 may receive data in UL resources based on UL grants.

The transmitting/receiving sections 103 may transmit information about a predetermined period (minimum processing time), transmission timing information, and so on. Also, the transmitting/receiving sections 103 may receive information about possible predetermined periods.

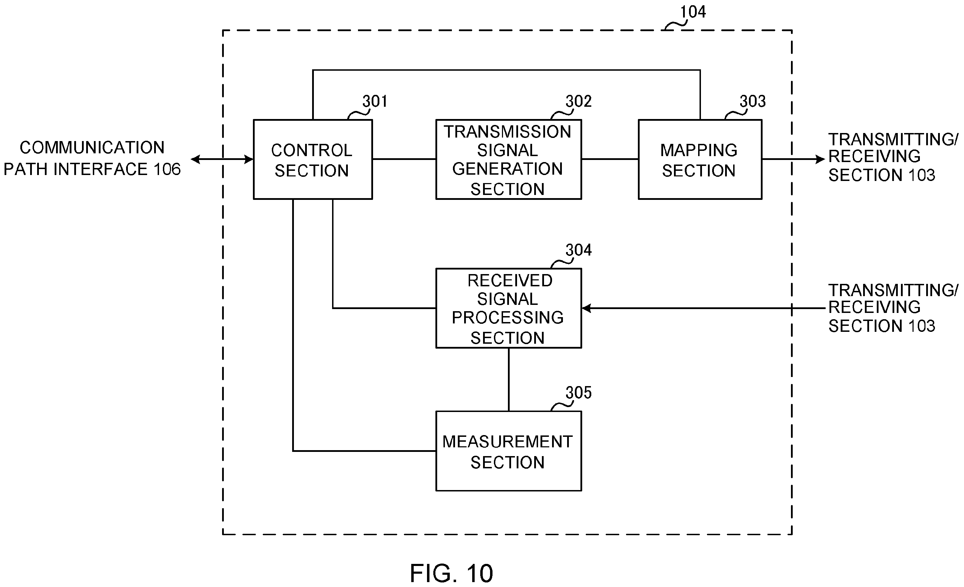

FIG. 10 is a diagram to show an example of a functional structure of a radio base station according to one embodiment of the present invention. Note that, although FIG. 10 primarily shows functional blocks that pertain to characteristic parts of the present embodiment, the radio base station 10 has other functional blocks that are necessary for radio communication as well. As shown in FIG. 10, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, the generation of DL signals by the transmission signal generation section 302, the mapping of DL signals by the mapping section 303, the receiving processes (for example, demodulation) for UL signals by the received signal processing section 304 and the measurements by the measurement section 305.

The control section 301 may schedule the PUSCH and/or the PDSCH for a user terminal 20. The control section 301 may control downlink control information (DCI) for scheduling the PUSCH and/or the PDSCH to be transmitted to the user terminal 20.

In addition, the control section 301 may control timing advance (TA) for the user terminal 20, or control the TA values to be transmitted to the user terminal 20. The control section 301 may report information for controlling the user terminal 20 to transmit a UL signal in the UL resource that is located a predetermined period after the timing where a DL signal is received, irrespective of the TA value, to the user terminal 20.

When the above DL signal is a data signal (PDSCH), the UL signal may be an HARQ-ACK in response to the data signal, or, if the above DL signal is DCI (UL grant) that schedules UL transmission, the UL signal may be a data signal (PUSCH).

Preferably, the above predetermined period is determined taking into account the processing time in the UE. Also, the above predetermined period may be configured individually for each cell and/or for each user terminal.

The control section 301 may report, to the user terminal 20, information for allowing the user terminal 20 to switch between a first method of transmitting a UL signal in the UL resource that is located a predetermined period after the timing where a DL signal is received, regardless of the TA value (the method of determining the transmission timing based on the actual time gap (the transmission timing determining method according to the first or the second aspect)) and a second method of transmitting a UL signal at a timing based on a TTI index with reference to the timing a DL signal is received (the method of determining the transmission timing based on a TTI (TTI index) (the existing transmission timing determining method)).

The control section 301 can be constituted by a controller, a control circuit or control apparatus that can be described based on general understanding of the technical field to which the present invention pertains.

The transmission signal generation section 302 generates DL signals (including DL data, DCI, UL data retransmission control information, higher layer control information and so on) based on commands from the control section 301, and outputs these signals to the mapping section 303.

For the transmission signal generation section 302, a signal generator, a signal generation circuit or signal generation apparatus that can be described based on general understanding of the technical field to which the present invention pertains can be used.

Based on commands from the control section 301, the mapping section 303 maps the DL signals (for example, DL data, DCI, UL data retransmission control information, higher layer control information, and so on) generated by the transmission signal generation section 302 to predetermined radio resources, and outputs these to the transmitting/receiving section 103. For the mapping section 303, mapper, a mapping circuit or a mapping device that can be described based on common understanding of the technical field to which the present invention pertains can be used.

The received signal processing section 304 performs the receiving process (for example, demapping, demodulation, decoding, etc.) of UL signals (HARQ-ACK, PUSCH, etc.) transmitted from the user terminal 20. To be more specific, the received signal processing section 304 may output the received signals, the signals after the receiving process and so on, to the measurement section 305. In addition, the received signal processing section 304 performs the receiving process for the A/Ns in response to the DL signals, and outputs ACKs or NACKs to the control section 301.

The measurement section 305 conducts measurements with respect to the received signals. The measurement section 305 can be constituted by a measurer, a measurement circuit or measurement apparatus that can be described based on general understanding of the technical field to which the present invention pertains.

Also, the measurement section 305 may measure the channel quality in UL based on, for example, the received power (for example, RSRP (Reference Signal Received Power)) and/or the received quality (for example, RSRQ (Reference Signal Received Quality)) of UL reference signals. The measurement results may be output to the control section 301.

### <User Terminal>

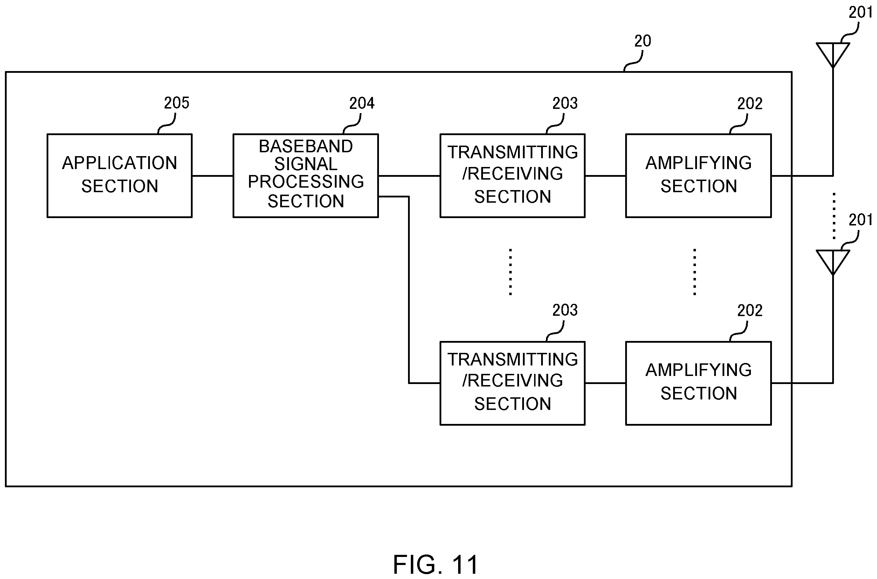

FIG. 11 is a diagram to show an example of an overall structure of a user terminal according to one embodiment of the present invention. The user terminal 20 includes a plurality of transmitting/receiving antennas 201 for MIMO (Multi-Input Multi-Output) transmission, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the DL signals amplified in the amplifying sections 202. The received signals are subjected to frequency conversion and converted into the baseband signal in the transmitting/receiving sections 203, and output to the baseband signal processing section 204.

In the baseband signal processing section 204, the baseband signal that is input is subjected to an FFT process, error correction decoding, a retransmission control receiving process, and so on. The DL data is forwarded to the application section 205. The application section 205 performs processes related to higher layers above the physical layer and the MAC layer, and so on. Also, the broadcast information is also forwarded to application section 205.

Meanwhile, the UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (for example, at least one of DL retransmission control information, CSI, and an SR) is also subjected to channel coding, rate matching, puncturing, DFT process, IFFT process and so on, and forwarded to each transmitting/receiving section 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

The transmitting/receiving sections 203 may receive DCI (DL assignment) that schedules a DL shared channel (for example, PDSCH), DCI (UL grant) that schedules a UL shared channel (for example, PUSCH), DL data (DL shared channel) and so on.

The transmitting/receiving sections 203 may transmit retransmission control information (HARQ-ACK) pertaining to the DL shared channel, following a command from the control section 401. Also, the transmitting/receiving section 203 may transmit data in resources based on UL grants, following a command from the control section 401.

The transmitting/receiving sections 203 may receive information about a predetermined period (minimum processing time), transmission timing information, and so on. Also, the transmitting/receiving section 203 may transmit information about possible predetermined periods.

For the transmitting/receiving sections 203, transmitters/receivers, transmitting/receiving circuits or transmitting/receiving devices that can be described based on common understanding of the technical field to which the present invention pertains can be used. Furthermore, a transmitting/receiving section 203 may be structured as one transmitting/receiving section, or may be formed with a transmitting section and a receiving section.

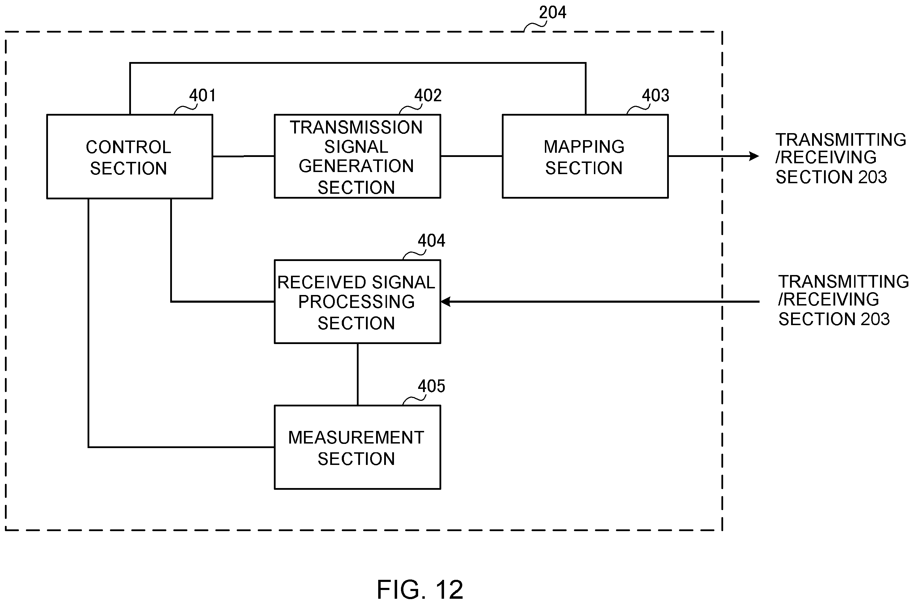

FIG. 12 is a diagram to show an example of a functional structure of a user terminal according to one embodiment of the present invention. Note that, although FIG. 12 primarily shows functional blocks that pertain to characteristic parts of the present embodiment, the user terminal 20 has other functional blocks that are necessary for radio communication as well. As shown in FIG. 12, the baseband signal processing section 204 provided in the user terminal 20 has a control section 401, a transmission signal generating section 402, a mapping section 403, a received signal processing section 404 and a measurement section 405.

The control section 401 controls the whole of the user terminal 20. The control section 401 controls, for example, the generation of UL signals in the transmission signal generation section 402, the mapping of UL signals in the mapping section 403, the UL signal receiving processes in the received signal processing section 404, the measurements in the measurement section 405 and so on.

The control section 401 controls the receipt of the PDSCH and/or the transmission of the PUSCH based on downlink control information (DCI) transmitted from the radio base station 10. The control section 401 may control the transmission of UL signals in response to DL signals based on timing advance (TA). Also, the control section 401 may exert control so that, regardless of the TA value, a UL signal is transmitted in the UL resource located a predetermined period after the timing where a DL signal is received.

Note that, if the above DL signal is a data signal (PDSCH), the UL signal may be an HARQ-ACK in response to the data signal, or, if the above DL signal is DCI (UL grant) that schedules UL transmission, the UL signal may be a data signal (PUSCH).

Preferably, the above predetermined period is determined taking into account the processing time in the UE. For example, the predetermined period may be a period equal to the minimum terminal processing time, or may be a period adding an offset to the minimum terminal processing time (where the offset is, for example, the period that follows after the minimum terminal processing time, up to the beginning of a new TTI). Also, the predetermined period may be configured individually for each cell and/or for each user terminal.

The control section 401 may control the transmission timing of the above UL signal based on the UL signal transmission timing information included in DCI.

The control section 401 may exert control for switching between a first method of transmitting a UL signal in the UL resource that is located a predetermined period after the timing where a DL signal is received, regardless of the TA value (the method of determining the transmission timing based on the actual time gap (the transmission timing determining method according to the first or the second aspect)) and a second method of transmitting a UL signal at a timing based on a TTI index with reference to the timing a DL signal is received (the method of determining the transmission timing based on a TTI (TTI index) (the existing transmission timing determining method)).

The above switching control in the control section 401 may be implemented based on information reported via higher layer signaling (aspect 3.1), may be implemented based on DCI (aspect 3.2), or may be implemented by combination higher layer signaling and DCI (aspect 3.3).

For the control section 401, a controller, a control circuit or control apparatus that can be described based on general understanding of the technical field to which the present invention pertains can be used.

In the transmission signal generation section 402, UL signals (including UL data signals, UCI, UL reference signals, UCI, and so on) are generated (including, for example, coding, rate matching, puncturing, modulation, and so on) based on commands from the control section 401, and output to the mapping section 403. For the transmission signal generation section 402, a signal generator, a signal generating circuit or a signal generating device that can be described based on common understanding of the technical field to which the present invention pertains can be used.

The mapping section 403 maps the UL signals generated in the transmission signal generation section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs the receiving process (for example, demapping, demodulation, decoding, and so on) of DL signals (DL data, DCI, higher layer control information, and so on). The received signal processing section 404 outputs the information received from the radio base station 10, to the control section 401. The received signal processing section 404 outputs, for example, broadcast information, system information, high layer control information related to higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CRS and/or CSI-RS) from the radio base station 10, and outputs the measurement results to the control section 401.

The measurement section 405 can be constituted by a signal processor, a signal processing circuit or signal processing apparatus, and a measurer, a measurement circuit or measurement apparatus that can be described based on general understanding of the technical field to which the present invention pertains.

### <Hardware Structure>

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

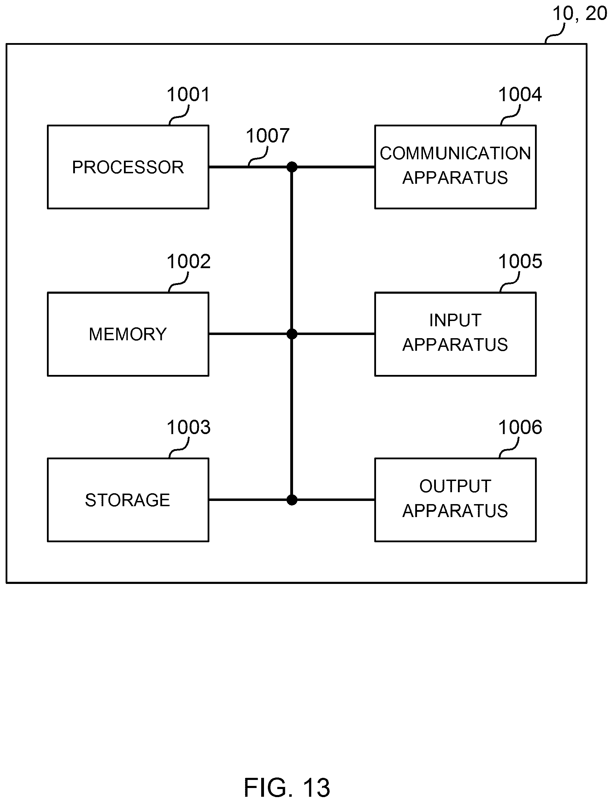

That is, a radio base station, a user terminal and so on according to one embodiment of the present invention may function as a computer that executes the processes of the radio communication method of the present invention. FIG. 13 is a diagram to show an example of a hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and the like for implementing the radio communication methods according to one embodiment of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be composed of one or more periods (frames) in the time domain. Each of one or more periods (frames) constituting a radio frame may be referred to as a "subframe." Furthermore, a subframe may be composed of one or more slots in the time domain. A subframe may be a fixed time duration (for example, 1 ms) not dependent on the numerology.

Furthermore, a slot may be composed of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of mini-slots. Each mini-slot may consist of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, one subframe may be referred to as a "transmission time interval" (TTI), or a plurality of consecutive subframes may be referred to as a "TTI," or one slot or mini-slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that when a TTI is given, the period of time (for example, the number of symbols) in which transport blocks, code blocks and/or codewords are actually mapped may be shorter than the TTI.

Note that, when one slot or one mini-slot is referred to as a "TTI," one or more TTIs (that is, one or more slots or one or more mini-slots) may be the minimum time unit of scheduling. Also, the number of slots (the number of mini-slots) to constitute this minimum time unit of scheduling may be controlled.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," "a partial TTI (or a "fractional TTI"), a "shortened subframe," a "short subframe," a "mini-slot," "a sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one mini-slot, one subframe or one TTI in length. One TTI and one subframe each may be composed of one or more resource blocks. Note that one or more RBs may be referred to as a "physical resource block (PRB: Physical RB)," a "subcarrier group (SCG: Sub-Carrier Group)," a "resource element group (REG)," an "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, mini-slots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input may be transmitted to other pieces of apparatus. The information, signals and so on to be input and/or output can be overwritten, updated or appended. The information, signals and so on that are output may be removed. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs: Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "radio communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base station may, in some cases, be performed by upper nodes. In a network composed of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

Note that the radio communication system 1 may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (Global System for Mobile communications) (registered trademark), CDMA 2000, UMB (Ultra Mobile Broadband), IEEE 802.11 (Wi-Fi (registered trademark)), IEEE 802.16 (WiMAX(registered trademark)), IEEE 802.20, WB (Ultra-WideBand), Bluetooth (registered trademark) and other appropriate radio communication technologies, and/or may be applied to next-generation systems that are enhanced base on these radio communication technologies.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. Thus, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure, ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. For example, "connection" may be interpreted as "access." As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-255537, filed on December 28, 2016, including the specification, drawings and abstract, is incorporated herein by reference in its entirety.

## Claims

1. A user terminal comprising:
a receiving section that receives a DL signal; and
a control section that controls transmission of a UL signal in response to the DL signal based on timing advance,
wherein the control section exerts control so that, regardless of a timing advance value, the UL signal is transmitted in a UL resource that is located a predetermined period after the timing where the DL signal is received.

2. The user terminal according to claim 1, wherein the predetermined period is configured individually for each cell and/or for each user terminal.

3. The user terminal according to claim 1 or claim 2, wherein the control section controls the timing to transmit the UL signal based on transmission timing information, which relates to the UL signal and which is included in downlink control information.

4. The user terminal according to one of claim 1 to claim 3, wherein the control section switches between a first method for transmitting the UL signal, whereby, regardless of the timing advance value, the UL signal is transmitted in the UL resource that is located the predetermined period after the timing where the DL signal is received, and a second method for transmitting the UL signal, whereby the UL signal is transmitted at a timing based on a TTI index with reference to the timing where the DL signal is received.

5. The user terminal according to claim 4, wherein the control section switches between the first method and the second method based on the downlink control information.

6. A radio communication method for a user terminal, comprising:
a receiving step of receiving a DL signal; and
a control step of controlling transmission of a UL signal in response to the DL signal based on timing advance,
wherein the control step exerts control so that, regardless of a timing advance value, the UL signal is transmitted in a UL resource that is located a predetermined period after the timing where the DL signal is received.
